# EUROPEAN PATENT APPLICATION

(11) **EP 4 664 547 A1**
(43) Date of publication of application: **17.12.2025**
(21) Application number: 25169952.6
(22) Date of filing: 11.04.2025
(51) Int. Cl.: H01M 4/133, H01M 4/134, H01M 4/1393, H01M 4/1395, H01M 4/36, H01M 4/38, H01M 4/587, H01M 4/62, H01M 10/054, H01M 4/13, H01M 4/02

(54) **ALLOYING ANODE ACTIVE MATERIALS FOR SODIUM-ION ENERGY STORAGE DEVICES, AND METHODS THEREOF**

(30) Priority: 12.04.2024 US 202463633506 P
(71) Applicant: Tesla, Inc., Austin, TX 78725 (US)
(72) Inventor: DAHN, Jeffery R., Austin (US); GARAYT, Matthew, Austin (US); OBIALOR, Martins, Austin (US); ZHANG, Yixiang, Austin (US); ZHANG, Libin, Austin (US); XING, Yingjie, Austin (US); METZGER, Michael, Austin (US); DESHMUKH, Jay, Austin (US); YANG, Chongyin, Austin (US)
(74) Representative: Zacco Sweden AB

(57) **Abstract**

An anode active material for a sodium ion energy storage device with improved volumetric capacity, capacity retention, and coulombic efficiency and the method thereof is disclosed. The anode active material comprises an alloying element. The anode active material may further comprise a carbon active material. The alloying element may be selected from phosphorus (P), germanium (Ge), tin (Sn), antimony (Sb), lead (Pb), and bismuth (Bi). The anode comprising the anode active material shows improved capacity retention.

## Description

### INCORPORATION BY REFERENCE TO ANY PRIORITY APPLICATIONS

Any and all applications for which a foreign or domestic priority claim is identified in the Application Data Sheet or PCT Request as filed with the present application are hereby incorporated by reference under 37 CFR 1.57, and Rules 4.18 and 20.6. This application claims the benefit of U.S. Provisional Application No. 63/633,506, filed on April 12, 2024, which is incorporated by reference herein in its entirety for all purposes.

### BACKGROUND

### Field

The present disclosure relates generally to energy storage devices, and specifically to anode active materials for sodium-ion energy storage devices and processes for forming the same.

### Description of the Related Art

Energy storage devices are widely used to provide power to electronic, electromechanical, electrochemical, and other useful devices. Such cells include primary chemical cells, secondary (rechargeable) cells, fuel cells, and various species of capacitors, including ultracapacitors. Currently, lithium ion batteries ("LIB") are widely used as the power source for electronic devices. However, the availability of lithium is limited on the earth. The high abundance of sodium (Na) and its ability to be utilized as the basis for an energy storage device makes sodium an attractive replacement for Li. However, one obstacle for wider-scale adoption remains the limited volumetric energy density of sodium-ion batteries relative to that of lithium-ion batteries. For example, the volumetric capacity of typical Na-ion battery negative electrodes such as hard carbon is limited to less than about 450 mAh/cm³.

As such, sodium-ion energy storage devices with improved volumetric energy densities may be advantageous.

### SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

All of these embodiments are intended to be within the scope of the invention herein disclosed. These and other embodiments will become readily apparent to those skilled in the art from the following detailed description of the preferred embodiments having reference to the attached figures, the invention not being limited to any particular preferred embodiment(s) disclosed.

In one aspect, a composite anode active material for sodium ion energy storage devices is disclosed. The composite anode active material comprises a carbon active material; and an alloying element selected from the group consisting of phosphorus (P), germanium (Ge), tin (Sn), antimony (Sb), lead (Pb), bismuth (Bi), and combinations thereof.

In some embodiments, the composite anode active material comprises about 5% to 95% by weight of the carbon active material. In some embodiments, the composite anode active material comprises about 5% to 95% by weight of the alloying element. In some embodiments, the alloying element is selected from the group consisting of P, Pb, Sn and combinations thereof. In some embodiments, the alloying element comprises a plurality of particles comprising a particle size of at most about 150 µm. In some embodiments, the carbon active material comprises hard carbon.

In another aspect, an anode film comprising a composite anode active material is disclosed. In some embodiments, the anode film comprises a thickness of about 2-100 µm. In some embodiments, the anode film further comprises a binder. In some embodiments, the anode film comprises the binder in an amount of at most about 5% by weight. In some embodiments, the anode film further comprises a conductive additive. In some embodiments, the anode film comprises the conductive additive in an amount of at most about 5% by weight.

In another aspect, an anode comprising a current collector and an anode film is disclosed. In some embodiments, the anode film is disposed over the current collector. In some embodiments, the current collector comprises a thickness of at most about 30 µm.

In another aspect, a sodium ion energy storage device comprising an anode is disclosed. In some embodiments, the anode of the sodium ion energy storage device comprises a specific capacity of at least about 370 mAh/g after 100 cycles. In some embodiments, the anode of the sodium ion energy storage device comprises a first cycle efficiency of at least about 85%. In some embodiments, the sodium ion energy storage device comprises a coulombic efficiency of at least about 99% after 20 cycles. In some embodiments, the sodium ion energy storage device comprises a capacity retention of at least about 90% after 200 cycles.

In another aspect, an anode active material for a sodium ion energy storage device is disclosed. The anode active material comprises an alloying element selected from the group consisting of phosphorus (P), germanium (Ge), tin (Sn), antimony (Sb), lead (Pb), bismuth (Bi), and combinations thereof.

In some embodiments, the alloying element is selected from the group consisting of Pb, Sn, P and combinations thereof. In some embodiments, the alloying element comprises a plurality of particles comprising a particle size of at most about 150 µm. In some embodiments, the anode active material comprises about 10% to 100% by weight of the alloying element.

In another aspect, an anode film comprising an anode active material is disclosed. In some embodiments, the anode film comprises a thickness of about 2-100 µm. In some embodiments, the anode film further comprises a binder. In some embodiments, the anode film comprises the binder in an amount of at most about 5% by weight. In some embodiments, the anode film further comprises a conductive additive. In some embodiments, the anode film comprises the conductive additive in an amount of less than about 5% by weight.

In another aspect, an anode comprising a current collector and an anode film is disclosed. In some embodiments, the anode film is disposed over the current collector. In some embodiments, the current collector comprises a thickness of at most about 30 µm.

In another aspect, a sodium ion energy storage device comprising an anode is disclosed. In some embodiments, the anode sodium ion energy storage device comprises a specific capacity of more than about 370 mAh/g after 100 cycles. In some embodiments, the sodium ion energy storage device comprises a first cycle efficiency of more than about 85%. In some embodiments, the sodium ion energy storage device comprises a coulombic efficiency of more than about 99% after 20 cycles. In some embodiments, the sodium ion energy storage device comprises a capacity retention of more than about 90% after 200 cycles.

In another aspect, a method of forming an anode electrode film for a sodium-ion energy storage device is disclosed. In some embodiments, the method comprises combining an active material, a binder, and a conductive additive to form an electrode film mixture and forming an anode electrode film from the electrode film mixture. In some embodiments, the method further comprises reducing a size of the composite anode active material to less than about 150 µm. In some embodiments, combining comprises mixing the anode active material with the conductive additive to form a first mixture and mixing the first mixture with the binder and the conductive additive to form the electrode film mixture.

### BRIEF DESCRIPTION OF THE DRAWINGS

FIGS. 1A and 1B are bar charts illustrating example London Metal Exchange (LME) and Shanghai Metals Market (SMM) prices for Ni (LME nickel), P (SMM yellow phosphorus), Sn (LME tin), Sb (SMM #1 antimony ingot), Pb (LME lead), and Bi (SMM refined bismuth) in US dollars per kilogram, or per mole, respectively.
FIG. 2 illustrates the atomic abundance in the Earth's crust relative to Si for the same elements shown in FIGS. 1A and 1B.
FIG. 3 illustrates an exemplary process for fabricating an electrode according to some embodiments.
FIG. 4A shows an experimental data plot of voltage versus specific capacity for Sn electrodes according to some embodiments.
FIG. 4B shows an experimental data plot of voltage versus the amount of Na in an Sn electrode according to some embodiments.
FIG. 5A shows an experimental data plot of voltage versus specific capacity for Pb electrodes according to some embodiments.
FIG. 5B shows an experimental data plot of voltage versus the amount of Na in a Pb electrode according to some embodiments.
FIG. 6 shows an experimental data plot of voltage versus specific capacity curves at cycle 2, 20, and 40 for P-HC electrodes according to some embodiments.
FIG. 7A shows an experimental data plot of specific capacity versus cycle for P-HC, Sn, and Pb electrodes according to some embodiments.
FIG. 7B shows an experimental data plot of normalized capacity versus cycle for P-HC, Sn, and Pb electrodes according to some embodiments.
FIG. 8A shows an experimental data plot of specific capacity versus cycle for Sn and Pb electrodes according to some embodiments.
FIG. 8B shows an experimental data plot of normalized capacity versus cycle for Sn and Pb electrodes according to some embodiments.
FIGS. 9A and 9B show experimental data plots of coulombic efficiency versus cycle for Sn, Pb, and hard carbon cells according to some embodiments.
FIG. 9C shows an experimental data plot of specific capacity versus cycle on sodiation and desodiation for Sn cells according to some embodiments.
FIG. 9D shows an experimental data plot of specific capacity versus cycle on sodiation and desodiation for Pb cells according to some embodiments.
FIG. 9E shows an SEM image of a Sn electrode with Sn particles reconstructed into uniformly distributed micro-structures after 50 cycles according to some embodiments.
FIG. 9F shows an SEM image of a Pb electrode with Pb particles reconstructed into uniformly distributed micro-structures after 100 cycles according to some embodiments.
FIGS. 10A-10D show SEM images of an initial Pb electrode, and the Pb electrode after 1, 10, and 100 cycles, respectively according to some embodiments.
FIG. 10E shows an SEM image of a Sn electrode after 50 cycles according to some embodiments.
FIG. 11A shows an experimental data plot of specific capacity versus cycle for Pb, hard carbon (HC), and a Pb-HC electrode according to some embodiments.
FIG. 11B shows an experimental data plot of fully-sodiated volumetric capacity versus cycle for Pb, hard carbon (HC), and a Pb-HC electrode according to some embodiments.
FIG. 11C shows an experimental data plot of normalized capacity volumetric capacity versus cycle for Pb, hard carbon (HC), and a Pb-HC electrode according to some embodiments.
FIG. 11D shows an experimental data plot of specific capacity versus cycle for Pb-HC electrodes utilizing G1 or EC:DEC electrolytes according to some embodiments.
FIG. 12A shows a calculated data plot of unsodiated volumetric capacity of alloying element-hard carbon blended electrodes versus weight fraction according to some embodiments.
FIG. 12B shows a calculated data plot of fully sodiated volumetric capacity of alloying element-hard carbon blended electrodes versus weight fraction according to some embodiments.
FIG. 12C shows a calculated data plot of volume expansion of alloying element-hard carbon blended electrode versus weight fraction according to some embodiments.
FIG. 12D shows a calculated data plot of unsodiated volumetric capacity versus volume expansion versus the alloy weight fraction of alloying element-hard carbon blended electrodes according to some embodiments.
FIG. 12E shows a calculated data plot of fully sodiated volumetric capacity versus volume expansion versus the alloy weight fraction of alloying element-hard carbon blended electrodes according to some embodiments.
FIG. 12F shows a calculated data plot of volume expansion for Na-alloying elements including P, Sn, Pb and Si when blended with hard carbon during cycling.

### DETAILED DESCRIPTION

The present disclosure may be understood by reference to the following detailed description. It is noted that, for purposes of illustrative clarity, certain elements in various drawings may not be drawn to scale, may be represented schematically or conceptually, or otherwise may not correspond exactly to certain physical configurations of embodiments.

Provided herein are various embodiments of electrode active materials and electrode films with improved energy density and capacity retention for Na-ion energy storage devices, and methods for preparing the same. The electrode active materials include an alloying element, and may further include a carbon active material. In some embodiments, the alloying element may be selected from phosphorus (P), germanium (Ge), tin (Sn), antimony (Sb), lead (Pb), bismuth (Bi), and combinations thereof. The electrode active materials and electrode films for Na-ion energy storage devices may allow for improved energy storage device performances, such as electrode capacities and improved cell cycling, and may allow for the accommodation of large volume expansion during charge and discharge.

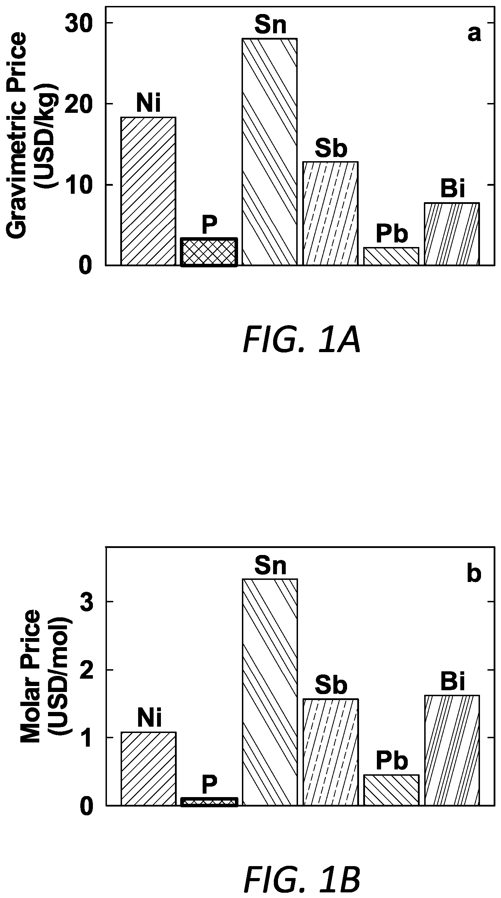

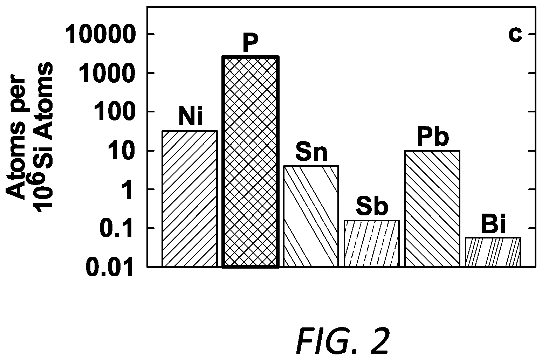

FIGS. 1A and 1B show the price of P, Ge, Sn, Sb, Pb, and Bi in U.S. dollars per kilogram or per mole respectively. FIG. 2 shows the abundance of P, Ge, Sn, Sb, Pb and Bi on the earth. Thus, based on the price and abundance of the elements, the selection of alloying elements of Sn, Pb, P, or combinations thereof may enable cost savings and/or be readily available for use. In some embodiments, when fully sodiated, amorphous red phosphorus becomes a crystalline Na₃P₁₄, and Sn and Pb have the same molar ratio of Na₁₅M₄ (M = Sn or Pb). Thus, the theoretical specific capacities of P, Sn, and Pb are 2596, 847, and 485 mAh/g, respectively. In addition, using their fully sodiated densities, the theoretical volumetric capacity of P, Sn and Pb may be about 1523, 1108, and 1072 mAh/cm³, respectively. Thus, the volumetric capacity of using the alloying elements as the anode may be greatly improved comparing using the conventional hard carbon anode for a Na-ion energy storage device, which is about 435 mAh/cm³ assuming a density of 1.45 g/cm³ and no volume change.

In some embodiments, an energy storage device including the electrode active materials disclosed herein may be characterized as having improved performances, such as improved electrode capacities, improved cell cycling performance, reduced loss of capacity over the life of the device, improved storage stability, improved power delivery, reduced electrode degradation and/or reduced capacity fade. The volume expansion and contraction of the electrode film including an alloying element may occur during cycling of the energy storage device. For example, the volume expansion for amorphous red phosphorus to Na₃P may be about 292%. As another example, the volume expansion for Pb and Sn comparing the fully unsodiated and sodiated phases are about 424% and 387% respectively. Such volume expansions and contraction during cycling may generally be expected to result in the pulverization and disconnection of the active material particles from the bulk electrode, and to cause instability in the solid electrolyte interphase (SEI). Despite such volume expansions and contractions, it was unexpectedly found that the Na-ion energy storage devices including the anode active material or the composite anode active material disclosed herein exhibit acceptable capacity retention after more than 200 cycles. In addition, it was found that the consistency in voltage curves between 100 and 200 cycles suggests the anode electrode disclosed herein experienced neither impedance growth nor active mass loss despite massive volume change for 200 cycles. Moreover, it was found that the anode disclosed herein demonstrates improved kinetics and rate capability.

### A. Active Materials

In some embodiments, the anode active material or the composite anode active material comprises an alloying element that is capable of being alloyed with sodium during charge and discharge process in an energy storage device. In some embodiments, the alloying element comprises a group IV and/or V element. In some embodiments, the alloying element is selected from phosphorus (P), germanium (Ge), tin (Sn), antimony (Sb), lead (Pb), bismuth (Bi), or combinations thereof. In some embodiments, the alloying element is selected tin (Sn), lead (Pb), phosphorus (P), or combinations thereof.

In some embodiments, the anode active material or the composite anode active material comprises the alloying element in an amount of, of about, of at least, or at least about, 5 wt.%, 10 wt.%, 15 wt.%, 20 wt.%, 25 wt.%, 30 wt.%, 35 wt.%, 40 wt.%, 45 wt.%, 50 wt.%, 55 wt.%, 60 wt.%, 65 wt.%, 70 wt.%, 75 wt.%, 80 wt.%, 81 wt.%, 82 wt.%, 83 wt.%, 84 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 99 wt.%, 100 wt.% or any range of values therebetween. In some embodiments, the anode active material or the composite anode active material comprises, consists of or consists essentially of the alloying element. In some embodiments, the anode active material or the composite anode active material consists of or consists essentially of Sn. In some embodiments, the anode active material or the composite anode active material consists of or consists essentially of Pb. In some embodiments, the anode active material or the composite anode active material consists of or consists essentially of P.

In some embodiments, the alloying element comprises particles with a D10, D50 or D90 size of, of about, of at most, or at most about, 300 µm, 200 µm, 150 µm, 125 µm, 100 µm, 90 µm, 80 µm, 70 µm, 60 µm, 50 µm, 45 µm, 40 µm, 35 µm, 30 µm, 25 µm, 20 µm, 15 µm, 10 µm, 5 µm, 2 µm, or any range of values therebetween. In some embodiments, the alloying element includes a particle size of, of about, of at most, or at most about, 50 µm, 45 µm, 40 µm, 35 µm, 30 µm, 25 µm, 20 µm, 15 µm, 10 µm, or any range of values therebetween. In some embodiments, the particle size of the alloying element refers to the largest dimension or average dimension of the particles. In some embodiments, the largest dimension refers to the longest or greatest distance between any two points within the object, for example, the greatest extent or measurement of an object in terms of length, width, or height, depending on the context. In some embodiments, the alloying element includes a flattened shape in the electrode film relative to the alloying element's shape in powder form (e.g., prior to calendering of the electrode film). In some embodiments, the alloying element comprises particle sizes configured to pass a sieve having a US mesh size of, of about, of at most, or at most about, 20, 25, 30, 35, 40, 45, 50, 60, 70, 80, 100, 120, 140, 170, 200, 230, 270, 325, 400, 450, 500, or 635, or any range of values therebetween.

In some embodiments, the alloying element is amorphous, crystalline, or a combination thereof. In some embodiments, an amorphous alloying element may reduce or aid in reducing the volume expansion or contraction of the alloying element during sodiation and unsodiation.

In some embodiments, the anode active material or the composite anode active material comprises a carbon active material. In some embodiments, the carbon active material is selected from a graphitic carbon, graphite, hard carbon, soft carbon and combinations thereof. In some embodiments, the carbon active material consists or consists essentially of hard carbon. In some embodiments, the anode active material or the composite anode active material comprises the carbon active material in an amount of, of about, of at most, or at most about, 95 wt.%, 90 wt.%, 85 wt.%, 80 wt.%, 75 wt.%, 70 wt.%, 65 wt.%, 60 wt.%, 55 wt.%, 50 wt.%, 45 wt.%, 40 wt.%, 35 wt.%, 30 wt.%, 25 wt.%, 20 wt.%, 19 wt.%, 18 wt.%, 17 wt.%, 16 wt.%, 15 wt.%, 14 wt.%, 13 wt.%, 12 wt.%, 11 wt.%, 10 wt.%, 9 wt.%, 8 wt.%, 7 wt.%, 6 wt.%, 5 wt.%, 4 wt.%, 3 wt.%, 2 wt.%, 1.5 wt.%, 1 wt.%, or any range of values therebetween.

In some embodiments, the anode active material or the composite anode active material comprises, consists of or consists essentially of the carbon active material and the alloying element. In some embodiments, the anode active material or the composite anode active material comprises an alloying element and the carbon active material in a mass ratio of, of about, of at least, or at least about, 5:95, 510:90, 15:85, 18:82, 2:8, 3:7, 4:6, 4.5:5.5, 5:5, 5.5:4.5, 6:4, 6.5:3.5: 7:3, 7.5:2.5, 8:2, 9:1, 9.5:0.5, or any range of values therebetween. In some embodiments, the anode active material comprises or consists of P and HC in a mass ratio of 18:82. In some embodiments, the anode active material comprises or consists of P and HC in a mass ratio of 1:1. In some embodiments, the anode active material comprises or consists of Sn and HC in a mass ratio of 31:69. In some embodiments, the anode active material comprises or consists of Pb and HC in a mass ratio of 45:55. In some embodiments, the anode active material comprises, consists of or consists essentially of phosphorus and hard carbon. In some embodiments, the anode active material comprises, consists of or consists essentially of tin and hard carbon. In some embodiments, the anode active material comprises, consists of or consists essentially of lead and hard carbon.

### B. Electrode Film

In some embodiments, the electrode film is an anode film. In some embodiments, the electrode film comprises an anode active material or a composite anode active material. In some embodiments, the electrode film comprises an anode active material in an amount of, of about, of at least, or at least about, 70 wt.%, 75 wt.%, 80 wt.%, 81 wt.%, 82 wt.%, 83 wt.%, 84 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 99 wt.%, 100 wt.%, or any range of values therebetween. In some embodiments, the alloying element is in the form of elementary substance (i.e., oxidation state of 0) in the electrode film before the formation and cycling of the energy storage device.

In some embodiments, the electrode film comprises a binder. In some embodiments, binders can include polytetrafluoroethylene (PTFE), polyvinylidene fluoride (PVDF), a polyolefin, polyalkylenes, polyethers, styrene-butadiene, co-polymers of polysiloxanes and polysiloxane, branched polyethers, polyvinylethers, a carboxymethylcellulose (CMC), poly acrylic acid (PAA), sodium poly acryilc acid (NaPAA), co-polymers thereof, and/or combinations thereof. In some embodiments, the polyolefin can include polyethylene (PE), polypropylene (PP), co-polymers thereof, and/or combinations thereof. The binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the binder comprises, consists essentially, or consists of PTFE, PVDF, CMC, PAA, NaPAA or combinations thereof. In some embodiments, the electrode film comprises a binder in an amount of, of about, of at most, or at most about, 30 wt.%, 25 wt.%, 20 wt.%, 19 wt.%, 18 wt.%, 17 wt.%, 16 wt.%, 15 wt.%, 14 wt.%, 13 wt.%, 12 wt.%, 11 wt.%, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. Without being limited to theory, the inventors discovered that comparing to prior studies, less exotic binders in the alloy-based electrodes may be needed, which means that more anode active material may be loaded for the anode.

In some embodiments, the electrode film includes a conductive additive. In some embodiments, the conductive additive comprises a conductive carbon additive. In some embodiments, the conductive carbon additive comprises a carbon black, carbon nanotubes such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black. In some embodiments, the conductive additive is carbon nanotubes. In some embodiments, the conductive additive comprises both carbon black and carbon nanotubes.

In some embodiments, the electrode film comprises a thickness of, of about, of at most, or at most about, 500 µm, 400 µm, 300 µm, 250 µm, 200 µm, 150 µm, 100 µm, 90 µm, 80 µm, 70 µm, 60 µm, 50 µm, 40 µm, 30 µm, 20 µm, 15 µm, 10 µm, 9 µm, 8 µm, 7 µm, 6 µm, 5 µm, 4 µm, 3 µm, 2 µm or 1 µm, or any range of values there between. The relatively thin electrode film thicknesses described may advantageously provide improved capacity retention and simultaneously accommodate the volume expansion of the electrode during the alloying process due at least in part to the relatively thin electrode film.

In some embodiments, the electrode film may provide an active material loading (which may be expressed as mass of electrode film per unit area of electrode film or current collector) of, of about, of at least, of at least about 1 mg/cm², 2 mg/cm², 3 mg/cm², 4 mg/cm², 5 mg/cm², 6 mg/cm², 7 mg/cm², 8 mg/cm², 9 mg/cm², 10 mg/cm², 11 mg/cm², 12 mg/cm², 15 mg/cm², 20 mg/cm², 25 mg/cm², 30 mg/cm², 35 mg/cm², 40 mg/cm², 45 mg/cm², 50 mg/cm², or any range of values therebetween.

An electrode film thickness can be selected to correspond to a desired areal capacity, specific capacity, areal energy density, energy density, or specific energy density. In some embodiments, the electrode film may provide an areal capacity (which may be expressed as capacity per unit area of electrode film or current collector) of, of about, of at least, of at least about 1 mAh/cm², 1.5 mAh/cm², 1.7 mAh/cm², 1.9 mAh/cm², 2.0 mAh/cm², 2.5 mAh/cm², 3 mAh/cm², 3.5 mAh/cm², 4 mAh/cm², 4.5 mAh/cm², 5 mAh/cm², 5.5 mAh/cm², ⁶ mAh/cm², 6.5 mAh/cm², 7 mAh/cm², 7.5 mAh/cm², 8 mAh/cm², 9 mAh/cm², 10 mAh/cm², 11 mAh/cm², 12 mAh/cm², 13 mAh/cm², 14 mAh/cm², 15mAh/cm², 20 mAh/cm², 25mAh/cm², 30 mAh/cm², 35 mAh/cm², 40 mAh/cm², 50 mAh/cm², or any range of values therebetween.

In some embodiments, electrode film is disposed on a current collector. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 30 µm, 20 µm, 15 µm, 10 µm, 9 µm, 8 µm, 7 µm, 6 µm, 5 µm, or any range of values therebetween.

### C. Fabrication of the Electrode Film

In some embodiments, the electrode film is fabricated through a wet process or a slurry process. In some embodiments, the electrode film is prepared by a wet or slurry-based electrode fabrication process.

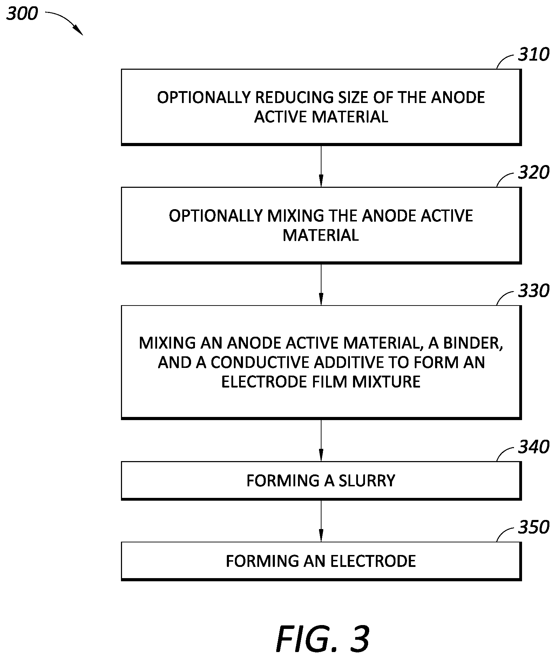

FIG. 3 illustrates an exemplary process 300 for fabricating an electrode film. The process 300 includes an optional step 310 of reducing the size of the anode active material or the composite anode active material to a desired size. In some embodiments, reducing the size of the anode active material comprises reducing the size of the alloying element. In some embodiments, reducing the size of anode active material comprises destructuring the alloying element. In some embodiments, destructuring comprises a step selected from crushing, milling, and combinations thereof. In some embodiments, reducing the size of anode active material comprises sieving the anode active material.

In some embodiments, the particles of the active anode material, such as the alloying element, include a D10, D50 or D90 size of, of about, of at most, or at most about, 300 µm, 200 µm, 150 µm, 125 µm, 100 µm, 90 µm, 80 µm, 70 µm, 60 µm, 50 µm, 45 µm, 40 µm, 35 µm, 30 µm, 25 µm, 20 µm, 15 µm, 10 µm, 5 µm, 2 µm, or any range of values therebetween. In some embodiments, the particles of the active anode material, such as the alloying element, include a particle size of, of about, of at most, or at most about, 50 µm, 45 µm, 40 µm, 35 µm, 30 µm, 25 µm, 20 µm, 15 µm, 10 µm, or any range of values therebetween. In some embodiments, the particles of the active anode material, such as the alloying element, include particle sizes configured to pass a sieve having a US mesh size of, of about, of at most, or at most about, 20, 25, 30, 35, 40, 45, 50, 60, 70, 80, 100, 120, 140, 170, 200, 230, 270, 325, 400, 450, 500, or 635, or any range of values therebetween.

With continued reference to FIG. 3, the fabrication process 300 includes an optional step 320 of mixing the anode active material or the composite anode active material. In some embodiments, especially mixing is performed when the anode active material comprises more than one ingredient. In some embodiments, mixing the anode active material comprises a step selected from milling, blending, and combinations thereof. In some embodiments, milling comprises ball milling. In some embodiments, the ingredients of the anode active material are mixed in a ratio intended in the electrode film. In some embodiments, mixing the anode active material comprises mixing the alloying element with the carbon active material. In some embodiments, mixing the anode active material comprises mixing the alloying element with hard carbon. In some embodiments, mixing the anode active material comprises mixing phosphorus with carbon active material. In some embodiments, mixing the anode active material comprises mixing tin with carbon active material. In some embodiments, mixing the anode active material comprises mixing lead with carbon active material. In some embodiments, mixing the anode active material comprises mixing the anode active material with a conductive additive. In some embodiments, mixing the anode active material with a conductive additive comprises mixing phosphorus with a conductive additive. In some embodiments, such mixing of anode active material with the conductive additive may enhance its conductivity and reduce the amount of conductive additive material used.

In step 330, an electrode film mixture may be formed by mixing an anode active material, a conductive additive and a binder. In some embodiments, the electrode film mixture comprises an anode active material in an amount of, of about, of at least, or at least about, 70 wt.%, 75 wt.%, 80 wt.%, 81 wt.%, 82 wt.%, 83 wt.%, 84 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 99 wt.%, 100 wt.%, or any range of values therebetween. In some embodiments, the anode active material consists of or consists essentially of the carbon active material and the alloying element. In some embodiments, the anode active material comprises the alloying element and the carbon active material in a mass ratio of, of about, of at least, or at least about, 0.5:9.5, 1:9, 2:8, 3:7, 4:6, 5:5, 5.5:4.5, 6:4, 6.5:3.5: 7:3, 7.5:2.5, 8:2, 9:1, 9.5:0.5, or any range of values therebetween. In some embodiments, the anode active material is hard carbon and phosphorus. In some embodiments, the anode active material is hard carbon and lead. In some embodiments, the anode active material is hard carbon and tin. In some embodiments, the anode active material consists of or consists essentially of tin, lead, phosphorus, or combinations thereof.

In some embodiments, the electrode film mixture comprises a binder in an amount of, of about, of at most, or at most about, 30 wt.%, 25 wt.%, 20 wt.%, 19 wt.%, 18 wt.%, 17 wt.%, 16 wt.%, 15 wt.%, 14 wt.%, 13 wt.%, 12 wt.%, 11 wt.%, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, the binder includes PTFE, PVDF, CMC, PAA, NaPAA, PVDF or combinations thereof.

In some embodiments, the electrode film mixture comprises a conductive material in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, the conductive carbon additive comprises a carbon black, carbon nanotubes such as single-walled carbon nanotubes (SWCNTs) and multi-walled carbon nanotubes (MWCNTs), or combinations thereof.

In optional step 340, a slurry is formed by combining the electrode film mixture formed in step 330 with a solvent. In some embodiments, the solvent is selected from N-Methylpyrrolidone (NMP), deionized water, or a combination thereof. In some embodiments, the combining comprises diluting the electrode film mixture to have a solid content of, of about, of at most, or at most about, 80 wt.%, 70 wt.%, 60 wt.%, 55 wt.%, 50 wt.%, 45 wt.%, 40 wt.%, 35 wt.%, 30 wt.%, 25 wt.%, 20 wt.%, 10 wt.%, or any range of values therebetween, of the final slurry mixture. In some embodiments, forming the slurry comprises mixing the electrode film mixture with the solvent.

In step 350, an electrode is formed from the electrode film mixture or slurry. In some embodiments, the electrode film mixture is formed into an electrode film and the electrode film is disposed over a current collector to form the electrode. In some embodiments, the slurry is disposed over a current collector to form a slurry coating. In some embodiments, the electrode film or the slurry coating comprises a thickness of, of about, of at most, or at most about, 500 µm, 450 µm, 400 µm, 350 µm, 300 µm, 250 µm, 200 µm, 150 µm, 100 µm, 50 µm, 40 µm, 30 µm, 20 µm, 15 µm, 10 µm, 9 µm, 8 µm, 7 µm, 6 µm, 5 µm, 4 µm, 3 µm, 2 µm, or any range of values therebetween. In some embodiments, the thickness of the electrode film mixture or slurry coating is set for the intended areal capacity. In some embodiments, the electrode film or the slurry coating is dried at a certain temperature. In some embodiments, the drying temperature is, is about, is at least, is at least about 70 °C, 75 °C, 80 °C, 85 °C, 90 °C, 95 °C, 100 °C, 110 °C, 120 °C, 130 °C, 140 °C, 150 °C, 160 °C, 170 °C, 180 °C, or any range of values therebetween. In some embodiments, the electrode film or the slurry coating is dried for, for about, for at least, for at least about 1 min, 5 min, 10 min, 15 min, 20 min, 30 min, 40 min, 50 min, 1h, 2h, 3h, 4h, 5h, 6h, 7h, 8h, 9h, 10h, or any range of values therebetween.

In some embodiments, forming the electrodes comprises calendering the electrode film. In some embodiments, the thickness of the electrode film is reduced by calendering. In some embodiments, after calendering, the electrode film comprises a thickness of, of about, of at most, or at most about, 200 µm, 150 µm, 100 µm, 90 µm, 80 µm, 70 µm, 60 µm, 50 µm, 40 µm, 30 µm, 20 µm, 15 µm, 10 µm, 9 µm, 8 µm, 7 µm, 6 µm, 5 µm, 4 µm, 3 µm, 2 µm or 1 µm, or any range of values therebetween. In some embodiments, the particles of the active anode material, such as the alloying element, are flattened during calendering. In some embodiments, after calendering, the particles of the alloying element include a D10, D50 or D90 size of, of about, of at most, or at most about, 300 µm, 200 µm, 150 µm, 125 µm, 100 µm, 90 µm, 80 µm, 70 µm, 60 µm, 50 µm, 45 µm, 40 µm, 35 µm, 30 µm, 25 µm, 20 µm, 15 µm, 10 µm, 5 µm, 2 µm, or any range of values therebetween. In some embodiments, after calendering, the particles of the alloying element include a particle size of, of about, of at most, or at most about, 50 µm, 45 µm, 40 µm, 35 µm, 30 µm, 25 µm, 20 µm, 15 µm, 10 µm, or any range of values therebetween. In some embodiments, after calendering, the particles of the alloying element include particle sizes configured to pass a sieve having a US mesh size of, of about, of at most, or at most about, 20, 25, 30, 35, 40, 45, 50, 60, 70, 80, 100, 120, 140, 170, 200, 230, 270, 325, 400, 450, 500, or 635, or any range of values therebetween.

In some embodiments, the electrodes are further dried at a temperature of, of about, of at least, of at least about 70 °C, 75 °C, 80 °C, 85 °C, 90 °C, 95 °C, 100 °C, 110 °C, 120 °C, 130°C, 140°C, 150 °C, 160 °C, 170 °C, 180 °C, or any range of values therebetween. In some embodiments, the electrode is dried for, for about, for at least, for at least about 30 min, 40 min, 60 min, 2h, 3h, 5h, 10h, 15h, 20h, or any range of values therebetween. In some embodiments, the electrode is dried under vacuum.

### D. Energy Storage Device

The anode active material or the composite anode active material may be used in the preparation of an electrode film and/or electrode for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device is a sodium (Na)-ion energy storage device. In some embodiments, the energy storage device comprises a battery or a capacitor. In some embodiments, the energy storage device is a sodium (Na)-ion battery. In some embodiments, the electrode is an anode for the Na-ion battery.

In some embodiments, the energy storage device is charged with a suitable sodium-containing electrolyte. For example, the energy storage device can include a sodium salt, and a solvent, such as an aqueous and/or organic solvent. Generally, the sodium salt includes an anion that is redox stable. In some embodiments, the anion can be monovalent. In some embodiments, a sodium salt can be selected from sodium hexafluorophosphate (NaPF₆), sodium bis(trifluoromethanesulfonyl)imide (NaFSI), sodium tetrafluoroborate (NaBF₄), sodium perchlorate (NaClO₄), sodium bis(trifluoromethansulfonyl)imide (NaN(SO₂CF₃)₂), sodium trifluoromethansulfonate (NaSO₃CF₃), sodium bis(oxalato)borate (NaB(C₂O₄)₂), sodium bis(fluorosulfonyl)imide (NaN(SO₂F)₂, sodium difluoro(oxalato)borate (NaC₂BF₂O₄) and combinations thereof. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a solvent. The solvent need not dissolve every component, and need not completely dissolve any component, of the electrolyte. In further embodiments, the solvent can be an organic solvent. In some embodiments, a solvent can include one or more functional groups selected from, carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,2-dimethoxyethane (G1 or DME) and combinations thereof. In some embodiments, the electrolyte comprises EC and DEC. In some embodiments, the ether can be selected from diethylene glycol dimethyl ether (diglyme or G2), triethylene glycol dimethyl ether (triglyme or G3), and Tetraethylene glycol dimethyl ether (tetraglyme or G4). In some embodiments, one or more solvents can be used at a concentration of, of about, of at least, or at least about, 30 wt.%, 35 wt.%, 40 wt.%, 45 wt.%, 50 wt.%, 55 wt.%, 60 wt.%, 65 wt.%, 70 wt.%, 75 wt.%, 80 wt.%, 85 wt.% or 90 wt.%, or any range of values therebetween. In some embodiments, the electrolyte does not comprise EC. In some embodiments, the electrolyte comprises G1. In some embodiments, the solvent for the energy storage device having an anode active material or a composite anode active material comprising Sn or Pb does not comprise EC.

In some embodiments, solvents are utilized as additives in the electrolyte system, and can be used at a concentration of, of about, of at most, or at most about, 0.1 wt.%, 0.2 wt.%, 0.3 wt.%, 0.4 wt.%, 0.5 wt.%, 0.6 wt.%, 0.7 wt.%, 0.8 wt.%, 0.9 wt.%, 1 wt.%, 1.1 wt.%, 1.2 wt.%, 1.3 wt.%, 1.4 wt.%, 1.5 wt.%, 1.6 wt.%, 1.7 wt.%, 1.8 wt.%, 1.9 wt.%, 2 wt.%, 2.1 wt.%, 2.2 wt.%, 2.3 wt.%, 2.4 wt.%, 2.5 wt.%, 2.6 wt.%, 2.7 wt.%, 2.8 wt.%, 2.9 wt.%, 3 wt.%, 4 wt.%, 5 wt.%, 6 wt.%, 7 wt.%, 8 wt.%, 9 wt.% or 10 wt.%, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%. In some embodiments, the additive is selected from fluoroethylene carbonate (FEC), dioxathiolane (e.g., 1,3,2-dioxathiolane-2,2-dioxide (DTD)), 1,2,6-oxadithiane 2,2,6,6-tetraoxide ("ODTO"), and combinations thereof.

In some embodiments, the energy storage device comprises an initial specific capacity of, of about, of at least, or of at least about, 80%, 85%, 90%, 91%, 92%, 93%, 94%, 95%, 96%, 97%, 98%, 99%, 99.5% or 100% of the theoretical specific capacity, or any range of values therebetween. In some embodiments, the anode of the energy storage device comprises an initial specific capacity of, of about, of at least, or of at least about, 300 mAh/g, 370 mAh/g, 400 mAh/g, 420 mAh/g, 450 mAh/g, 470 mAh/g, 500 mAh/g, 550 mAh/g, 600 mAh/g, 650 mAh/g, 700 mAh/g, 750 mAh/g, 800 mAh/g, 850 mAh/g, 900 mAh/g, 950 mAh/g, 1000 mAh/g, 1100 mAh/g, 1200 mAh/g, 1300 mAh/g, 1400 mAh/g, 1500 mAh/g, 1600 mAh/g, 1700 mAh/g, 1800 mAh/g, 1900 mAh/g, 2000 mAh/g, or any range of values therebetween. In some embodiments, the anode of the energy storage device comprises a specific capacity after 100 cycles of, of about, of at least, or of at least about, 300 mAh/g, 370 mAh/g, 400 mAh/g, 420 mAh/g, 450 mAh/g, 470 mAh/g, 500 mAh/g, 550 mAh/g, 600 mAh/g, 650 mAh/g, 700 mAh/g, 750 mAh/g, 800 mAh/g, 850 mAh/g, 900 mAh/g, 950 mAh/g, 1000 mAh/g, 1100 mAh/g, 1200 mAh/g, 1300 mAh/g, 1400 mAh/g, 1500 mAh/g, 1600 mAh/g, 1700 mAh/g, 1800 mAh/g, 1900 mAh/g, 2000 mAh/g, or any range of values therebetween. In some embodiments, the anode of the energy storage device comprises a specific capacity after 200 cycles of, of about, of at least, or of at least about, 300 mAh/g, 370 mAh/g, 400 mAh/g, 420 mAh/g, 450 mAh/g, 470 mAh/g, 500 mAh/g, 550 mAh/g, 600 mAh/g, 650 mAh/g, 700 mAh/g, 750 mAh/g, 800 mAh/g, 850 mAh/g, 900 mAh/g, 950 mAh/g, 1000 mAh/g, 1100 mAh/g, 1200 mAh/g, 1300 mAh/g, 1400 mAh/g, 1500 mAh/g, 1600 mAh/g, 1700 mAh/g, 1800 mAh/g, 1900 mAh/g, 2000 mAh/g, or any range of values therebetween.

In some embodiments, the anode of the energy storage device has a first cycle coulombic efficiency of, of about, of at least, or of at least about, 80%, 85%, 88%, 90%, 91%, 92%, 93%, 94%, 95%, 96%, 97%, 98%, 99%, 100% or any range of values therebetween. In some embodiments, the anode of the energy storage device has a coulombic efficiency of, of about, of at least, or of at least about, 95%, 96%, 97%, 98%, 99%, 99.5%, 99.8%, 99.9%, or any range of values therebetween, after 20 cycles. In some embodiments, the anode of the energy storage device has a coulombic efficiency of, of about, of at least, or of at least about, 95%, 96%, 97%, 98%, 99%, 99.5%, 99.99% or any range of values therebetween, after 100 cycles.

In some embodiments, capacity retention is, is about, is at least, or is at least about, 85%, 90%, 91%, 92%, 93%, 94%, 95%, 96%, 97%, 98%, 99%, 99.5% or 99.9% of the original capacity after 100 cycles, or any range of values therebetween. In some embodiments, capacity retention is, is about, is at least, or is at least about, 85%, 90%, 91%, 92%, 93%, 94%, 95%, 96%, 97%, 98%, 99%, 99.5% or 99.9% of the original capacity after 200 cycles, or any range of values therebetween. In some embodiments, the irreversible capacity loss is, is about, is at most, or is at most about, 8%, 7%, 6%, 5%, 4%, 3%, 2%, 1%, 0.5%, 0.1%, 0% after 50 cycles, or any range of values therebetween.

In some embodiments, after a number of cycles, the anode active material or the composite anode active material, such as the alloying element, is reconstructed into smaller and more uniformly sized particles comparing to the size of the particles when they are used to form the electrode film. In some embodiments, the size of the anode active material is reduced to, to about, to at most, or to at most about, 10 µm, 9 µm, 8 µm, 7 µm, 6 µm, 5 µm, 4 µm, 3 µm, 2 µm, 1 µm, 500 nm, 200 nm or any values therebetween. In some embodiments, the reconstruction occurs in the first 1, 2, 3, 4, 5, 6, 7, 8, 9, 10, 15, 20, 25, 30, 50, 100 cycles, or any range of values therebetween.

In some embodiments, the anode of the energy storage device is configured to be discharged to a voltage of, of about, of at least, or of at least about, 0.005 V versus Na metal. In some embodiments, the anode of the energy storage device is configured to be recharged to a voltage of, of about, of at most, or of at least about, 1.4 V versus Na metal.

### EXAMPLES

Example embodiments of the present disclosure, including processes, materials and/or resultant products, are described in the following examples.

### Example 1 - Phosphorus-Hard Carbon Electrode Preparation

Phosphorus-Hard Carbon (P-HC) electrodes were prepared by a slurry process. Red phosphorus was ball-milled with carbon black (Super S) at a mass ratio of 7:2 for 12 hours at 600 rpm. A slurry was then formed by mixing the hard carbon powder (BSHC-320), single wall carbon nanotubes (OCSiAl TUBALL 0611, 0.8% SWCNT, 1.2% CMC, 98% H₂O), polyacrylic acid sodium salt (PAANa, average Mw ~8,000, 45 wt.% in H₂O), CMC and the mixed red phosphorus and carbon black with a weight ratio of 60%:2%:7%:3%:20%:8%. The slurry was diluted by adding the deionized H₂O such that the final P-HC electrode film mixture had about 26% solid content by weight. The final P-HC electrode film mixture was formed by being mixed in a planetary mixer in three or four 100 second intervals. The final P-HC electrode film mixture was then uniformly coated on an aluminum foil with an active mass loading of about 3 mg/cm² and a projected areal capacity of about 2 mAh/cm². The P-HC electrode film coating on the aluminum foil was dried for about 2h at 90 °C and then was calendered at 2000 atm. The dried and calendered P-HC electrode film coating on the aluminum foil was punched into 12.75 mm diameter circular electrodes. The electrodes were then dried at above 90 °C for about 10h under vacuum and transferred inside an Ar-filled glovebox for fabrication into coin cells.

### Example 2 - Lead-Hard Carbon Electrode Preparation

Lead-Hard Carbon (Pb-HC) electrodes were prepared by a slurry process. A Pb-HC blend was made by blending the hard carbon and Pb in a weight ratio of 1:1. The Pb powder was sieved with a 625 mesh before being blended with the hard carbon. A Pb-HC slurry was made by mixing the Pb-HC blend, PVDF, carbon black, and SWCNT in a weight ratio of 96%:2%:1.5%:0.5%. The Pb-HC slurry was diluted with NMP to reach a 45 wt.% solid content. The Pb-HC electrode film mixture was formed in the same mixing procedure as in Example 1. The Pb-HC electrode film mixture was coated on an aluminum foil with an active mass loading of about 8 mg/cm², which gives a projected areal capacity of about 3 mAh/cm². The coated aluminum foil was dried, calendered, and punched in the same manner as the P-HC electrodes in Example 1 to form the Pb-HC electrodes.

### Example 3 - Tin-Hard Carbon Electrode Preparation

Tin-Hard Carbon (Sn-HC) electrodes were prepared by a slurry process. A Sn-HC blend was made by blending the hard carbon and Sn in a weight ratio of 7:3. The Sn-HC blend was abbreviated. A Sn-HC slurry was made by mixing the Sn-HC blend, PAA, and SWCNT at a weight ratio of 96%: 3.5%: 0.5%. The Sn-HC slurry was diluted with deionized water to reach a 45 wt.% solid content to form the Sn-HC electrode film mixture. The Sn-HC electrode film mixture was mixed in the same mixing procedure as in Example 1. The Sn-HC electrode film mixture was coated on an aluminum foil with an active mass loading of about 8 mg/cm², which gives a projected areal capacity of about 3 mAh/cm². The coated aluminum foil was dried, calendered, and punched in the same manner as the Sn-HC electrodes in Example 1 to form the Sn-HC electrodes.

### Example 4 - Tin Electrode Preparation

Tin (Sn) electrodes were prepared by a slurry process. A tin electrode slurry was formed by mixing the Sn powder (-100 mesh, 99.85% metals basis), carbon black, SWCNT, 9.9% NaPAA, and CMC in a weight ratio of 79.5%:9.4%:0.5%:9.9%:0.7%. The tin electrode slurry was then diluted by adding the deionized H₂O such that the final slurry has about 40 wt.% of solid content. The tin electrode film mixture was formed in the same mixing procedure and the final slurry was coated on the aluminum foil in the same coating procedure as in the fabrication process of P-HC electrode in Example 1. The active mass loading of the Sn electrode film coating on the aluminum foil is about 4.5 mg/cm², giving a projected areal capacity of about 3.6 mAh/cm². The coated aluminum foil was dried, calendered, and punched to form a Sn electrode in the same manner as the P-HC electrodes. The Sn electrodes were then dried at above 90 °C for about 10h under vacuum and transferred inside an Ar-filled glovebox for fabrication into coin cells.

In another example, a second tin electrode slurry was formed by mixing the Sn powder, carbon black, SWCNT, polyacrylic acid in a weight ratio of about 90%:4.5%:0.5%:4.25%. The second final tin electrode film mixture was diluted by adding deionized water such that the final tin electrode slurry has about 45% solid content. The second final tin electrode film mixture was mixed, coated, dried, calendered, and the second tin electrode was fabricated in the same manner as the fabrication of first tin electrode above. The second tin electrode has similar mass loadings for coin cells as the first tin electrode above.

### Example 5 - Lead Electrode Preparation

A lead (Pb) electrode slurry was prepared by mixing the Pb powder, PVDF, carbon black, and SWCNT (OCSiAl TUBALL 0521, 1% SWCNT, 2% Solvay Solef 5130 PVDF, 97% NMP) in a weight ratio of 90%:5%:4.5%:0.5%. The Pb powder (-200 mesh, 99.9% metals basis) was used to form the slurry following sieving through a 625 mesh (20 µm). The lead electrode slurry was diluted by adding NMP (99.5%) such that the final slurry has 40 wt.% of the solid content to form the lead electrode film mixture. The lead electrode film mixture was formed by being mixed in the same mixing procedure in the fabrication process of P-HC electrode in Example 1. The lead electrode film mixture was coated on an aluminum foil with an active mass loading of about 4 or about 14 mg/cm², yielding a projected areal capacity of about 2 mAh/cm² or about 7 mAh/cm² respectively. The coated aluminum foils were dried, calendered and punched to form the lead electrode in the same manner as the P-HC electrodes in Example 1.

In another example, a second Pb slurry was prepared by mixing the Pb powder, PVDF, carbon black, and SWCNT in a weight ratio of 96%:2%:1.5%:0.5%. The second Pb slurry was diluted to form the second lead electrode film mixture with NMP to reach a solid content of about 40 wt.%. The second lead electrode film mixture was coated on the aluminum foil with an active mass loading of about 4 mg/cm², yielding a projected areal capacity of about 1.9 mAh/cm². The aluminum foil coated with the second lead electrode film mixture was dried, calendered and punched to form the second lead electrode in the same manner as the P-HC electrodes in Example 1.

Table 1 summarizes the measured thickness, projected area capacity for some Pb electrodes. Sample Nos. 1-2 in Table 1 used Pb particles having a size of about 20 µm for forming an electrode mixture. Sample No. 3 is formed with Pb particles that could pass through a 325 US mesh size. Sample No. 4 is formed with a mixture of Pb powders with 0.1% powders having a size larger than 150 mesh, 10.6% powders having a size larger than 200 mesh, 18.1% powders having a size larger than 325 mesh, and 71.2% powders having a size larger smaller than 325 mesh. Table 2 summarizes the Areal Capacity for different thickness with the parameters summarized in Table 3.

**TABLE 1**

| **Sample No.** | **Description** | **Active Fraction (%)** | **Electrode Areal Capacity (mAh/cm²)** | **Average Coating Thickness (µm ± 0.5 µm)** |
|---|---|---|---|---|
| 1 | 20 µm Pb metal | 90 | 1.54 | 10.5 |
| 2 | 20 µm Pb metal | 96 | 4.45 | 21.8 |
| 3 | PL-325 Pb¹ | 96 | 2.58 | 8.5 |
| 4 | PL-145 Pb² | 96 | 1.35 | 6.8 |

| | | | | |
|---|---|---|---|---|
| ¹ Pb powder passed through a 325 mesh screen. ² A mixture of Pb powder with 0.1% powders having a size larger than 150 mesh, 10.6% powders having a size larger than 200 mesh, 18.1% powders having a size larger than 325 mesh, 71.2% powders having a size larger smaller than 325 mesh. | | | | |

**TABLE 2**

| **Positive Electrode Areal Capacity (mAh/cm²)** | **Pb Negative Electrode Areal Capacity (mAh/cm²)** | **Pb Negative Electrode Thickness without Current Collector (µm)** |
|---|---|---|
| 1 | 1.1 | 3.45 |
| 2 | 2.2 | 6.89 |
| 3 | 3.3 | 10.34 |
| 4 | 4.4 | 13.79 |
| 5 | 5.5 | 17.24 |
| 6 | 6.6 | 20.68 |
| 7 | 7.7 | 24.13 |
| 8 | 8.8 | 27.58 |
| 9 | 9.9 | 31.03 |
| 10 | 11 | 34.47 |

**TABLE 3**

| **N/P Ratio** | **Pb Theoretical Specific Capacity (mAh/g)** | **Pb Density (g/cm³)** | **Pb Theoretical Volumetric Capacity (mAh/cm³)** | **Pb Active Fraction (%)** | **Pb Negative Electrode Porosity (%)** | **PVDF Fraction (%)** | **PVDF Density (g/cm³)** | **Carbon Black Fraction (%)** | **Carbon Black Density (g/cm³)** |
|---|---|---|---|---|---|---|---|---|---|
| 1.1 | 485.0 | 11.35 | 5505.5 | 96 | 40 | 2 | 1.4 | 2 | 2 |

### Example 6 - Hard Carbon Electrode Preparation

A hard carbon (HC) electrode was prepared as a control anode for comparison. A slurry was prepared by mixing hard carbon powders, PVDF, carbon black, and SWCNT in a weight ratio of 96%:2%:1.5%:0.5%. The slurry was diluted with NMP to reach a 40 wt.% solid content. The HC electrode film mixture was formed in the same mixing procedure as in Example 1. The HC electrode film mixture was coated on an aluminum foil (about 15 microns thick) with an active mass loading of about 7 mg/cm², which gives a projected areal capacity of about 2 mAh/cm². The coated aluminum foil was dried, calendered, and punched in the same manner as the P-HC electrodes in Example 1 to form the HC electrodes.

### Example 7 - Electrolyte Preparation

The electrolyte for the cell comprising the P-HC electrode was formed by mixing 1.0 M NaPF₆ salt with ethylene carbonade:diethyl carbonate 1:1 (abbreviated EC:DEC, w/w), along with 5% by weight fluoroethylene carbonate (FEC; 4-Fluoro-1,3-dioxolan-2-one) in the glove box.

The electrolyte for the cell comprising the Sn electrode, Pb Electrode and pure hard carbon electrode is a mixture of 1,2-dimethoxyethane (G1; anhydrous, 99.5%) and 1.0 M NaPF₆ salt.

### Example 8 - Coin Cell Fabrication and Cycling

CR2325 (23 mm diameter by 2.5 mm height) half coin cells were assembled inside an Ar-filled glovebox with the negative electrode, two layers of polypropylene (PP) separator (25 µm thick, surfactant-coated), one layer of chemical-resistant PP mesh (98 x 98 mesh, 150 µm opening size, 34% open area, 109 µm wire diameter, 200 µm thick), two more layers of PP separator, and finally Na metal foil. The PP mesh was sandwiched between the PP separators to increase the spacing between the positive and negative electrodes and hence avoid short-circuiting by sodium dendrites. The hardware included a 400-series stainless-steel base, PP gasket, 304 stainless-steel spacer, stainless-steel disc spring, and a 300-series stainless-steel cap. Each cell contained a total of 100-125 µL of electrolyte. Crimped coin cells were then removed from the glovebox for cycling.

The half coin cells with P-HC electrode (Pb-HC half cell) were cycled between 0.005 and 1 V versus Na⁺/Na on a Battery Testing System in a 30.0 ± 0.1 °C temperature-controlled chamber. The half coin cells with Sn electrode (Sn half cell) were cycled between 0.005 and 0.8 V versus Na⁺/Na on a Battery Testing System. The first two cycles of the Pb-HC cells and the Sn cells consisted of a C/20 constant current (CC) charge, and a C/20 constant current constant voltage (CCCV) discharge with a C/40 current cutoff. The following cycles consisted of a C/5 CC charge, and a C/5 CCCV discharge with a C/20 current cut-off. After every 50 C/5 cycles, two C/20 "check-up" cycles were performed to probe low-rate capacity retention.

The half coin cells with Pb electrode (Pb half cells) were cycled using testers in 30.0 ± 0.1 °C temperature-controlled chambers. The formation protocol for the half coin cells with Pb electrode involved CC cycling between 0.005 and 0.8 V versus Na⁺/Na, with an initial 2C, C, and C/2 discharge to 0.8 V, before switching to C/20 for two cycles. The initial 2C, C, and C/2 discharge to 0.8 V can avoid anomalous high voltage irreversible capacity.

The formation of the half coin cells with pure hard carbon electrode (HC half cell) used CC cycling with 0.005 and 1.5 V versus Na⁺/Na voltage limits and a C/20 current for two cycles. After formation, the HC cells were cycled with a C/5 current for subsequent long-term cycling with the same voltage limits. Every 50 C/5 cycles, two C/20 check-up cycles were performed.

### Example 9 - Voltage Profile of Sn Half Cell

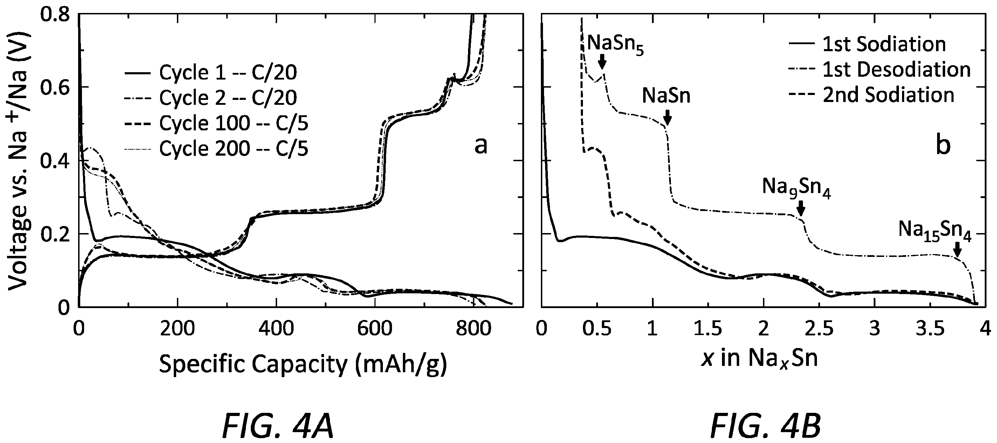

FIG. 4A shows the voltage profiles of the formation cycles, cycle 100, and cycle 200 of Sn half cells with NaPAA binder and 1M NaPF₆ in G1 electrolyte. As illustrated in FIG. 4A, the first discharge (sodiation) and charge (desodiation) capacities are 877.8 mAh/g and 796.1 mAh/g, respectively, giving a first cycle coulombic efficiency (FCE) of 90.7%. FIG. 4B shows that the first desodiation and second sodiation curves exhibit four steps between plateaus corresponding to the four Na*ₓ*Sn phases. As shown in FIG. 4A, the second discharge and charge capacities were 802.4 mAh/g and 822.8 mAh/g, giving a CE of 102.5%. After the initial 2 formation cycles at C/20, the Sn half cell was cycled at C/5 for long-term cycling. Remarkably, voltage curves of cycle 100 and 200 substantially overlap with those of the formation cycles and achieve a reversible capacity of 820 mAh/g, which is similar to the theoretical capacity of 847 mAh/g. The consistency in voltage curves suggests the Sn electrode did not substantially experience impedance growth or active mass loss despite repeatedly undergoing 424% volume change for 200 cycles. Moreover, the overlapping voltage curves for C/20 and C/5 also indicate that the Sn electrode has excellent kinetics and rate capability.

In addition, FIG. 4A shows that Sn versus Na⁺/Na cells with 1 M NaPF₆ in G1 electrolyte had no anomalous high voltage irreversible capacity (AHVIC) during the first discharge at C/20 from open-circuit voltage (OCV) of 1.8 V, suggesting good electrolyte stability on this Sn electrode.

### Example 10 - Voltage Profile of Pb Half Cell

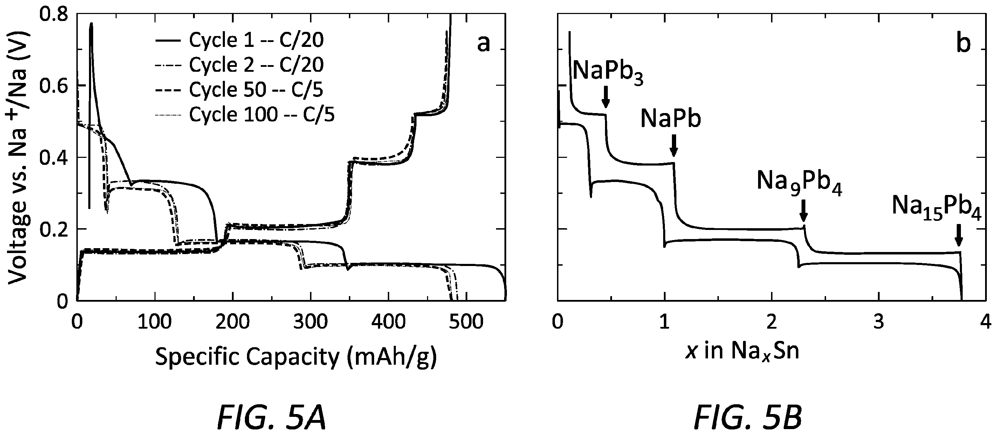

FIG. 5A shows the sodiation and desodiation voltage curves versus the specific capacity for a Pb half cell from formation to cycle 100. As illustrated in FIG. 5A, the voltage curve from cycle 2 at C/20 and the voltage curves at cycles 50 and 100 at C/5 substantially overlap, which indicates a minimal capacity loss or average voltage increase. In addition, FIG. 5A shows that subsequent cycles after the formation cycle show substantially minimal fade and the capacity remains at essentially the theoretical capacity of 485 mAh/g. Although the Na kinetics in Pb may cause volume expansion of the Pb, the good capacity retention illustrated in FIG. 5A indicates that volume expansion is not a significant problem for the appropriately-sized Pb particles. FIG. 5A also shows that there are no substantial changes to the voltage curve over the 100 cycles, indicating little to no voltage polarization growth or irreversible structural changes. The Pb half cell cycling shows excellent results despite the 387% volume change which occurs every cycle.

FIG. 5B shows the voltage versus x in Na*ₓ*Pb, along with appropriate labels for the Na-Pb phases. The experimental values for x match the expected literature phases, indicating essentially 100% utilization of the Pb in this cell. It is also worth noting that the voltage polarization between phase change plateaus is not identical. The Pb to NaPb₃ plateau has a voltage polarization of 34 mV, the NaPb₃ to NaPb plateau's is the largest at 66 mV, the NaPb to Na₉Pb₄ plateau's is 32 mV, and the Na₉Pb₄ to Na₁₅Pb₄ plateau's is the smallest at 28 mV.

### Example 11 - Voltage Profile of P-HC Half Cell

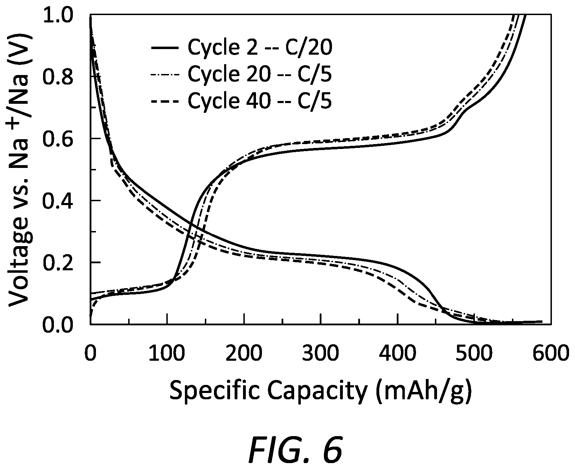

FIG. 6 shows the charge and discharge curves of P-HC electrode with a mass ratio of 1:3. There are two charge plateaus at about 0.1 V and about 0.6 V, corresponding to the desodiation processes of hard carbon and phosphorus, respectively. Unlike Sn and Pb, the conversion of P to Na₃P is characterized by a single voltage plateau. With 25% P by weight in the blend, the capacity of P-HC electrode reaches about 560 mAh/g, which is much higher than that of pure hard carbon, which is about 300 mAh/g. Additionally, a carbonate electrolyte is used for P-HC electrodes, which has higher stability comparing to G1 at higher voltage.

### Example 12 - Long-term Cycle Performances of P-HC, Sn, and Pb Half Cells

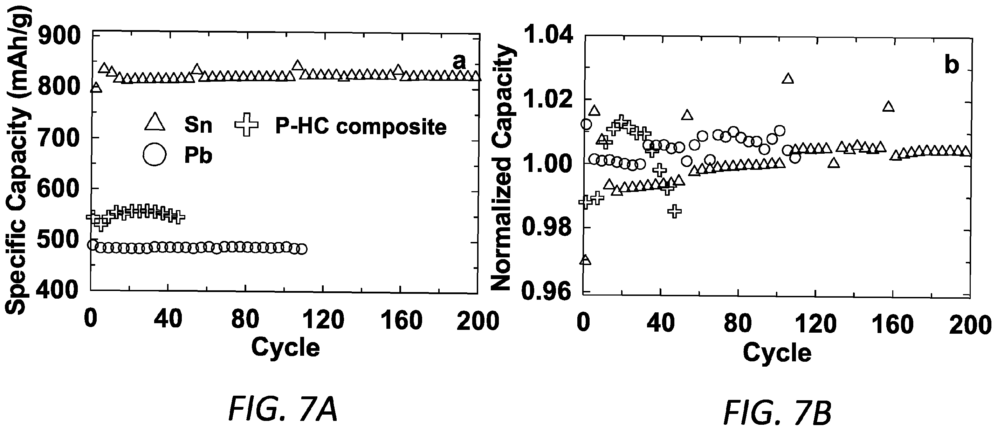

FIGS. 7A and 7B illustrate the long-term cycling performances of P-HC, Sn, and Pb half cells. The Sn half cell exhibits an initial capacity hump before stabilizing at 820 mAh/g for over 200 cycles. This capacity hump may be caused by the breakdown of large Sn particles and SEI formation simultaneously occurs in early cycles. After 15 cycles, the cell appears to have reached a steady state, with the specific capacity remaining stable over subsequent cycles.

The Pb half cells in FIG. 7A match the theoretical specific capacity of 485 mAh/g even after 100 cycles at C/5. There is thus no significant difference in capacity between the C/5 and C/20 checkup cycles, again supporting the excellent kinetics for Na alloying in Pb as shown in FIG. 5B. The normalized capacity plot in FIG. 7B shows no capacity loss throughout the cell's lifetime.

The P-HC half cell also exhibits good cycling stability. Initially, there's a slight capacity increase to about 560 mAh/g, followed by stable cycling to 30 cycles, as shown in FIG. 7A.

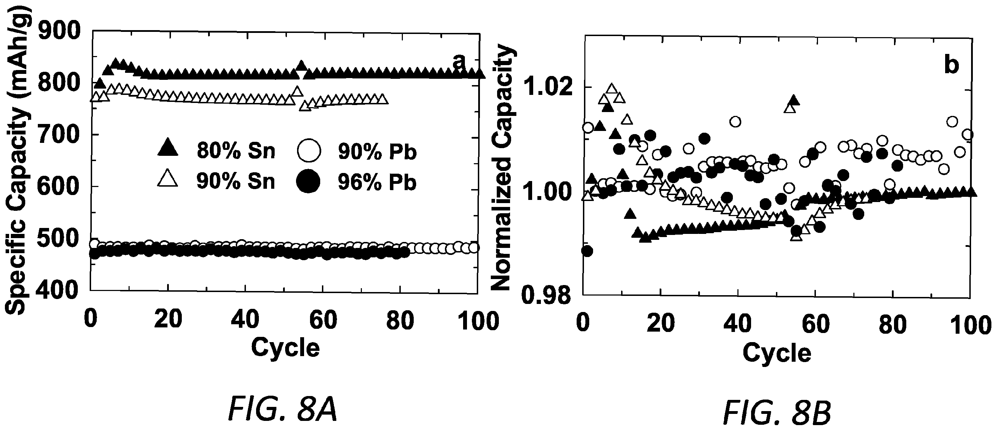

FIG. 8A shows the specific capacity versus cycle data for Sn with 80% or 90% by weight active material and Pb with 90% or 96% active material by weight in the electrode, with 1 M NaPF₆ in G1 electrolyte. FIG. 8B shows the normalized capacity to the third cycle (first cycle at C/5) versus cycle data. As illustrated in FIGS. 8A and 8B, electrodes containing larger active material fractions of Pb and Sn were tested in half cells.

For Sn, as illustrated in FIG. 8A, increasing the amount of the active material decreased the specific capacity from about 820 mAh/g to about 770 mAh/g after 80 cycles, while the capacity retention remains similar as illustrated in FIG. 8B. For Pb, there is less of a difference between using 90% and using 96% active material, with the specific capacity only decreasing slightly from 485 mAh/g to 475 mAh/g after 80 cycles as shown in FIG. 8A. Little difference in capacity retention was found when the Pb active material amount is increased, as shown in FIG. 8B.

### Example 13 - Ultra-High Precision Coulometry

Ultra-High Precision Coulometry (UHPC) cycle testing of the Sn cell (80% active material), Pb cell (96% active material) and HC cell were performed. These cells were cycled at C/20 in CC mode for 20 cycles in a 40.0 ± 0.1 °C temperature-controlled chamber on a UHPC system to collect precise cycling statistics comparing the various electrode pairings.

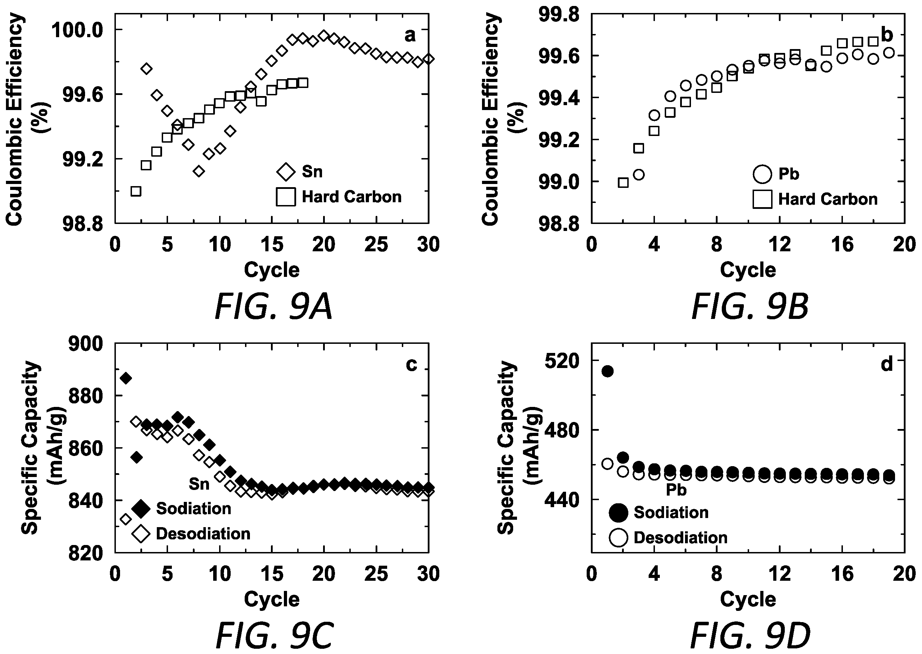

FIG. 9A illustrates the UHPC data for Sn and hard carbon half cells tested with 1 M NaPF₆ in G1 electrolyte at a C/20 rate and 40 °C. FIG. 9B illustrates the UHPC data for Pb and hard carbon half cells tested with 1 M NaPF₆ in G1 electrolyte at a C/20 rate and 40 °C Pb, and hard carbon cells tested with 1 M NaPF₆ in G1 electrolyte at a C/20 rate and 40 °C. As shown in FIG. 9A, the Coulombic efficiency (CE) of the Sn cell decreases from an initial high of 101.6% at cycle 2 (not shown), indicating not all the Na alloyed on the first sodiation de-alloyed in the first desodiation but did so in the second desodiation. Over the next 8 cycles, the CE returns below 100% and decreases to a minimum of 99.3%, then levels off at 99.8% after 30 cycles. By contrast, the hard carbon and Pb in FIG. 9B show a more traditional trend with the CE starting low around 98.9% and increasing steadily to 99.6% after 20 cycles.

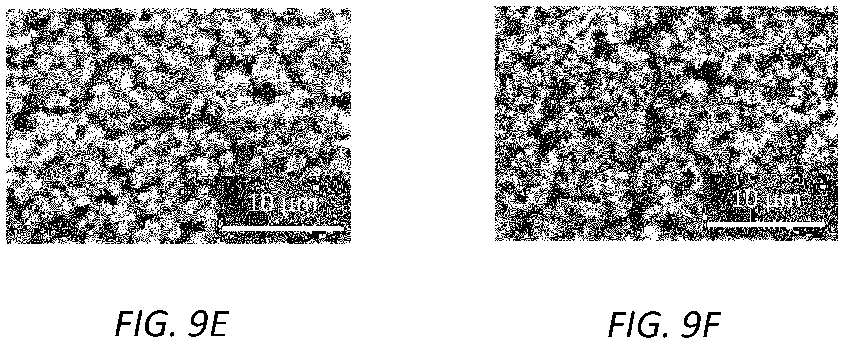

FIG. 9C illustrates the specific capacity on sodiation and desodiation for Sn versus cycle and FIG. 9E shows an SEM image of a Sn electrode showing large Sn particles reconstructed into uniformly distributed micro-structures after 50 cycles. FIG. 9D illustrates the specific capacity on sodiation and desodiation for Pb versus cycle and FIG. 9F shows an SEM image of a Pb electrode showing large Pb particles reconstructed into uniformly distributed micro-structures after 100 cycles. The specific capacities for Sn and Pb in FIGS. 9C and 9D, respectively, are also markedly different in the early cycles, and are consistent with the trends observed in cycling in FIGS. 7A and 7B. The specific capacity of the Sn electrode in FIG. 9C is slightly higher than that in FIG. 7A, which may be due to the elevated operating temperature. The Pb specific capacity decreases slightly after formation and remains around 460 mAh/g, whereas the Sn shows initial specific capacity increase in the first 7 cycles. This is then followed by the Sn specific capacity decreasing and levelling off around cycle 20 at 840 mAh/g.

The specific capacity of the Sn and Pb half cells become constant during cycling as shown in FIGS. 9C and 9D. This occurs almost immediately for the Pb cell and after about 20 cycles for the Sn cell. Once the capacity is constant it can be observed that the CE is less than 1 for both cells. The departure from exactly 1 indicates that the sodiation capacity, which includes alloying and additional SEI formation, is larger than the desodiation capacity which represents dealloying only. As the CE approaches exactly 1 as cycling proceeds, the amount of Na being lost to SEI thickening per cycle decreases. Note that the experiments in FIGS. 9A-9F were performed at very low current (C/20) to give extended time for the SEI thickening reactions to occur and cause greater departures of the CE from 1.00000. Additionally, selecting an elevated temperature of 40 °C also accelerates SEI thickening reactions. Obtaining CE's as high as 99.8% under such conditions mirrors those found in Li/graphite half cells. The data shown in FIGS. 9A-9F suggests that despite the significant morphological reconstruction of the Sn and Pb electrodes, the consumption of Na inventory by SEI is moderate and limited in the early cycles, which indicates good cycling performance of Sn and Pb negative electrodes in full cells.

### Example 14 - Morphology of the Sn and Pb Electrode

Scanning Electron Microscopy (SEM) images for a desodiated, post-cycled Sn electrode and a desodiated, post-cycled Pb electrode (90% active material, following the cycling protocol for non-UHPC cells to 106 cycles) were taken.

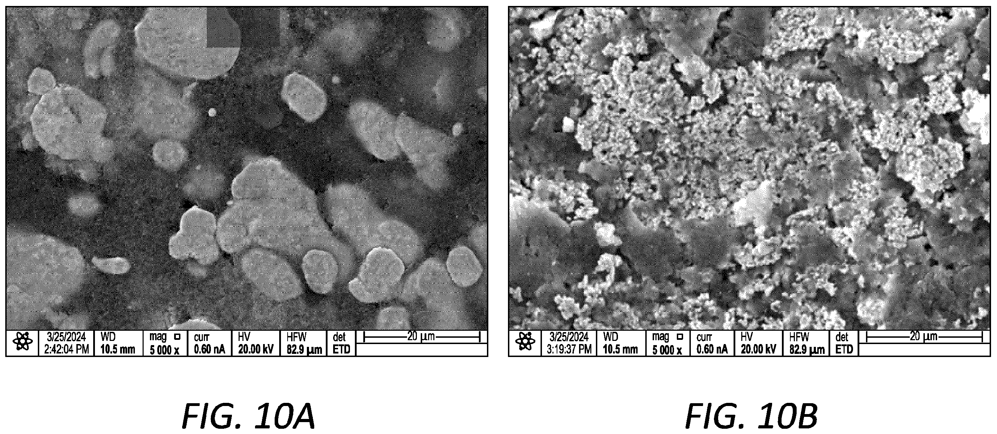

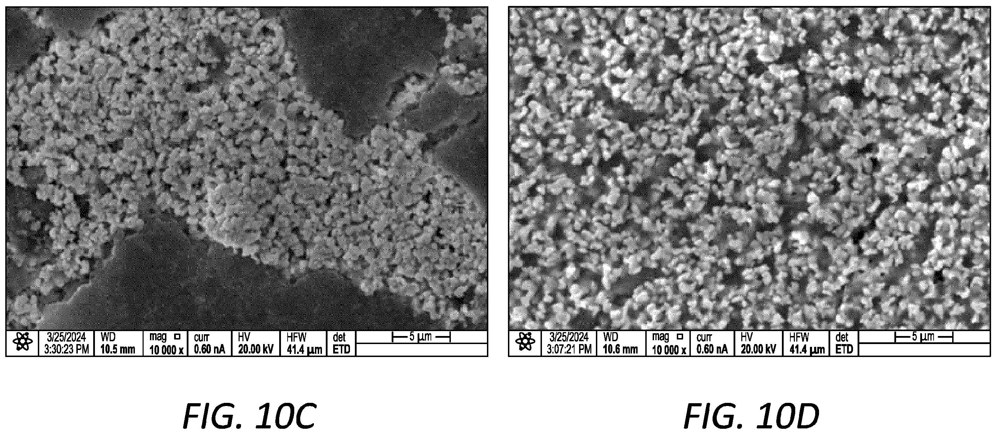

FIG. 10A shows an SEM image of an initial Pb electrode. FIGS. 10B-10D show the SEM images of the Pb electrode after 1 cycle at C/20, 10 and 100 cycles at C/5. As illustrated in FIGS. 10A-10D, the initial large Pb particles reconstructed into uniformly distributed micro-structures after 100 cycles. The pristine Pb electrode contained particles up to 20 µm, while the post 100 cycled electrode shows particles on the scale of 1 µm.

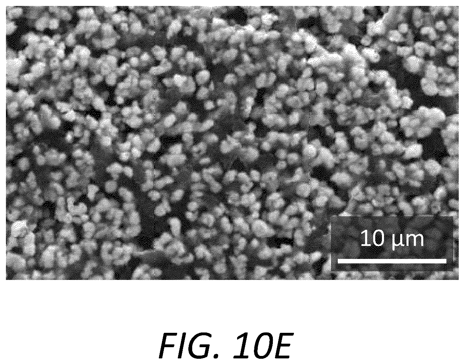

FIG. 10E shows an *ex situ* SEM image of the Sn electrode in the desodiated state after 50 cycles at C/5 (the same cycling conditions as the cell in FIG. 5A). FIG. 10A shows that the large Sn particles reconstructed into uniformly distributed micro-structures after 50 cycles. The cycled Sn electrode comprises uniformly distributed Sn particles at the scale of 1 µm, in contrast to the diverse particle sizes smaller than about 150 µm found in the pristine Sn powder.

FIG. 10B shows an inset SEM image of a Pb electrode showing large Pb particles reconstructed into uniformly distributed micro-structures after 100 cycles. FIG. 10B shows a similar reconstruction phenomenon for a desodiated Pb electrode after 106 cycles. The pristine Pb electrode contained particles up to 20 µm, while the post-cycled electrode shows particles on the scale of 1 µm.

### Example 15 - Long-term Cycle Performances of Pb-HC, Pb, and HC Half Cells

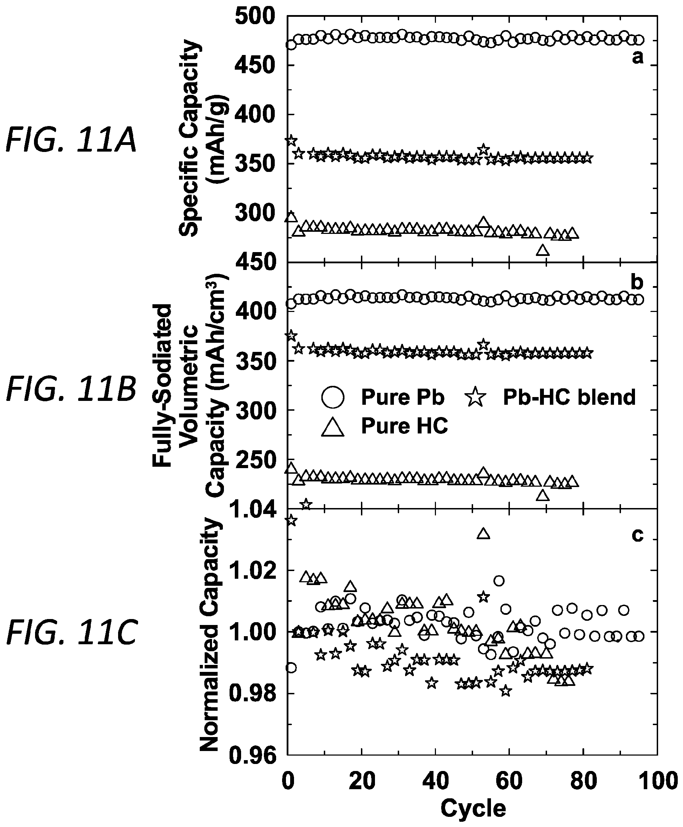

FIGS. 11A-11C illustrate the cycling performance of Pb, hard carbon (HC), and a 50:50 (w/w) blend of Pb and hard carbon (Pb-HC) half cells with 1 M NaPF6 in G1 electrolyte. FIG. 11A illustrates the specific capacity versus cycle for each electrode. FIG. 11B illustrates the estimated fully-sodiated volumetric capacity versus cycle for each electrode based on the actual electrode dimensions and the assumption that the volume expansion does not change the electrode porosity. FIG. 11C illustrates the normalized capacity to the third cycle (first cycle at C/5) versus cycle.

As illustrated in FIGS. 11A and 11B, the Pb-HC blend shows a specific capacity of about 360 mAh/g and, due to the estimated fully-sodiated density being 1.01 g/cm³, shows an estimated fully-sodiated volumetric capacity of about 360 mAh/cm³. This specific capacity agrees with the pure Pb cells displaying about 475 mAh/g while the pure hard carbon has about 285 mAh/g. Impressively, the volumetric capacity of the Pb-HC blend of about 360 mAh/cm³ is 57% greater than that of pure hard carbon, a mere about 230 mAh/cm³, and only 12% lower than pure Pb at about 410 mAh/cm³, all while demonstrating 99% capacity retention after 60 cycles in FIG. 11C. Overall, the Pb-HC blend retains the excellent cycling stability of pure Pb while decreasing the maximum volume expansion to 44% and significantly increasing the volumetric capacity as compared to pure hard carbon.

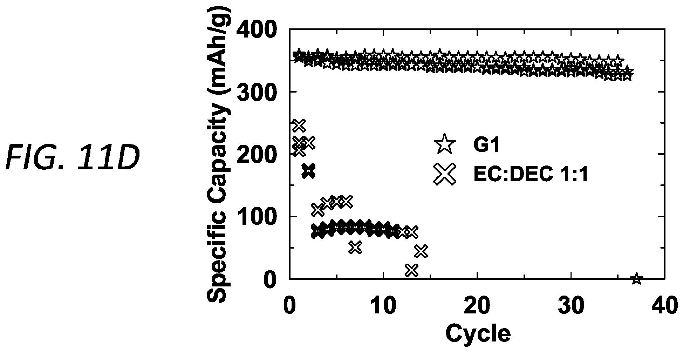

FIG. 11D compares the cycling performance of Pb-HC electrodes in 1 M NaPF₆ dissolved in G1 or EC:DEC (w/w 1:1) electrolytes. As illustrated in FIG. 11D, the Pb-HC cells shows a large cycling performance fade with the EC:DEC electrolyte relative to the G1 electrolyte.

### Example 16 - Volume Expansion of Alloy/Hard Carbon Electrode

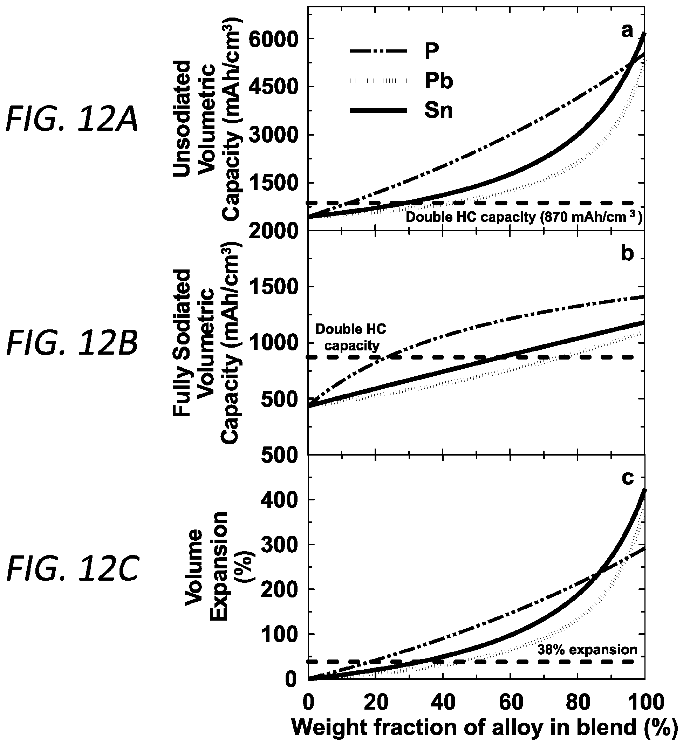

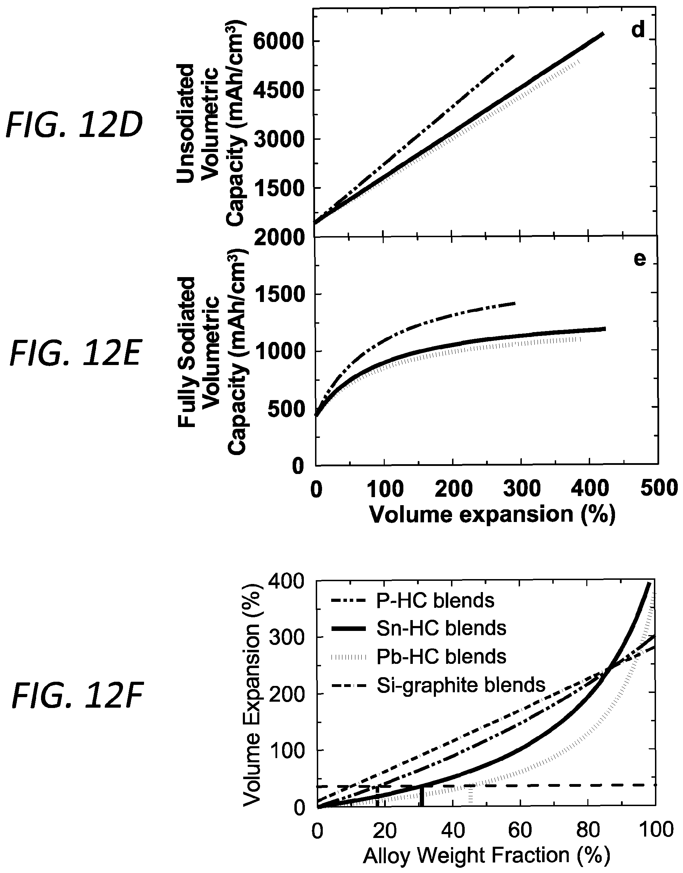

FIGS. 12A and 12B illustrate the calculated unsodiated and fully sodiated volumetric capacity of alloy/hard carbon blends versus weight fraction of P (in red), Pb (in black), and Sn (in blue), respectively. The dashed line in FIGS. 12A and 12B indicates double the volumetric capacity of hard carbon at 870 mAh/cm³. FIG. 12C illustrates the calculated volume expansion of alloy/hard carbon blends versus weight fraction of alloy. The dashed line in FIG. 12C marks 38% which is the estimated volume expansion for a 10% Si/graphite blend operated in a Li-ion cell. FIGS. 12D and 12E illustrate the unsodiated and fully sodiated volumetric capacity versus volume expansion as the alloy weight fraction is increased, respectively.

FIGS. 12A-12C show the calculated volumetric capacities and volume expansion of alloy-hard carbon (alloy-HC) blends with different alloy weight fractions. As illustrated in FIGS. 12A-12C, blending the alloying element with hard carbon provides one option for the application of Sn and Pb negative electrodes in Na-ion cells with fixed size casings (i.e. cylindrical cells). Pure P, Sn and Pb have very similar volumetric capacities, while a P-HC blend can achieve the same capacity with the lowest alloy weight fraction. For example, to double the volumetric capacity of hard carbon, approximately 12% P by weight is required in the P-HC blend, 29% Sn in the Sn-HC blend, and 43% Pb in the Pb-HC blend, resulting in volume expansions of approximately 24%, 32%, and 35%, respectively. Comparatively, considering that 10% Si by weight in a Si-graphite blend will lead to approximately 38% volume expansion in a Li-ion cell, the volume expansion of all these alloy-HC blends is possibly acceptable in today's battery cell and pack designs. This highlights the significant potential of alloy-HC blends to enhance the volumetric energy density of sodium-ion energy storage devices, while maintaining manageable volume expansion.

FIG. 12F shows the calculated volume expansion for Na-alloying elements like P, Sn, and Pb when blended with hard carbon during cycling. The dashed line indicates the volume expansion for 10:90 Si:graphite (wt/wt) which can be handled in commercial cells. As illustrated in FIG. 12F, the volume expansion that can be handled by commercial cells for P-HC, Sn-HC and Pb-HC has a ratio of 18:82, 31:69, 45:55 respectively.

While certain embodiments have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately," "about," "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

The headings provided herein, if any, are for convenience only and do not necessarily affect the scope or meaning of the devices and methods disclosed herein.

## Claims

1. A sodium ion energy storage device, comprising:
a cathode;
an electrolyte comprising a sodium salt; and
an anode comprising a composite anode active material, wherein the composite anode active material comprises:
a carbon active material; and
an alloying element selected from the group consisting of phosphorus (P), germanium (Ge), tin (Sn), antimony (Sb), lead (Pb), bismuth (Bi), and combinations thereof.

2. The sodium ion energy storage device of Claim 1, wherein the composite anode active material comprises about 5% to 95% by weight of the carbon active material.

3. The sodium ion energy storage device of Claim 1 or 2, wherein the composite anode active material comprises about 5% to 95% by weight of the alloying element.

4. The sodium ion energy storage device of any one of Claims 1-3, wherein the alloying element is selected from the group consists of P, Pb, Sn and combinations thereof.

5. The sodium ion energy storage device of any one of Claims 1-4, wherein the alloying element comprises a plurality of particles comprising a particle size of at most about 150 µm.

6. The sodium ion energy storage device of any one of Claims 1-5, wherein the carbon active material comprises hard carbon.

7. The sodium ion energy storage device of any one of Claim 1-6, wherein the anode further comprises an anode film; preferably wherein the anode film comprises a thickness of about 2-100 µm.

8. The sodium ion energy storage device of Claim 7, wherein the anode film further comprises a binder; preferably wherein the anode film comprises the binder in an amount of at most about 5% by weight.

9. The sodium ion energy storage device of Claim 7 or 8, wherein the anode film further comprises a conductive additive; preferably wherein the anode film comprises the conductive additive in an amount of at most about 5% by weight.

10. The sodium ion energy storage device of any one of Claims 7-9, wherein the anode comprises the anode film disposed over a current collector; preferably wherein the current collector comprises a thickness of at most about 30 µm.

11. The sodium ion energy storage device of any one of Claims 1-10, wherein the anode of the sodium ion energy storage device comprises a specific capacity of at least about 370 mAh/g after 100 cycles; preferably wherein the anode of the sodium ion energy storage device comprises a first cycle efficiency of at least about 85%.

12. The sodium ion energy storage device of any one of Claims 1-11, wherein the sodium ion energy storage device comprises a coulombic efficiency of at least about 99% after 20 cycles; preferably wherein the sodium ion energy storage device comprises a capacity retention of at least about 90% after 200 cycles.

13. A method of forming an anode electrode film for a sodium-ion energy storage device, the method comprising:
combining a composite anode active material, a binder, and a conductive additive to form an electrode film mixture, wherein the composite anode active material comprises:
a carbon active material; and
an alloying element selected from the group consisting of phosphorus (P), germanium (Ge), tin (Sn), antimony (Sb), lead (Pb), bismuth (Bi), and combinations thereof; and
forming an anode electrode film from the electrode film mixture.

14. The method of Claim 13, further comprising reducing a size of the composite anode active material to less than about 150 µm.

15. The method of Claim 13 or 14, wherein combining comprises:
mixing the composite anode active material with the conductive additive to form a first mixture; and
mixing the first mixture with the binder and the conductive additive to form the electrode film mixture.
